# EUROPÄISCHE PATENTSCHRIFT

(11) **EP 3 807 460 B1**
(45) Veröffentlichungstag und Bekanntmachung des Hinweises auf die Patenterteilung: **23.04.2025**
(21) Anmeldenummer: 19731657.3
(22) Anmeldetag: 12.06.2019
(51) Int. Cl.: D21C 11/00, D21C 7/00, D21C 11/04, D21C 11/10

(54) **VERFAHREN ZUR ISOLIERUNG VON LIGNIN AUS EINEM ALKALISCHEN PROZESSSTROM**
PROCESS FOR ISOLATING LIGNIN FROM AN ALKALINE PROCESS STREAM
PROCÉDÉ D'ISOLEMENT DE LA LIGNINE D'UN FLUX DE TRAITEMENT ALCALIN

(30) Priorität: 15.06.2018 AT 1752018
(43) Veröffentlichungstag der Anmeldung: 21.04.2021
(73) Patentinhaber: Mondi AG, 1030 Wien (AT)
(72) Erfinder: KIENBERGER, Marlene, 8041 Graz (AT); SIEBENHOFER, Matthäus, 8042 Graz (AT); PICHLER, Thomas Michael, 8424 Gabersdorf (AT)
(74) Vertreter: Cunow, Gerda
(86) Internationale Anmeldenummer: PCT/EP2019/065396
(87) Internationale Veröffentlichungsnummer: WO 2019/238783

(56) Entgegenhaltungen:
- WO-A1-2006/031175
- WO-A1-2008/079072
- WO-A1-2009/104995
- WO-A1-2012/049375
- WO-A1-2014/116150
- WO-A1-2016/165023
- US-A1- 2011 297 340
- US-A1- 2016 115 281

## Beschreibung

Die vorliegende Erfindung bezieht sich auf ein Verfahren zur kontinuierlichen Isolierung von Lignin aus einem aus eingedickter Schwarzlauge bestehenden alkalischen Prozessstrom.

Lignin ist neben Zellulose das Hauptprodukt der Zellstoffherstellung und überdies ist Lignin das zweithäufigste Biopolymer, das weltweit vorkommt. Es gibt eine große Anzahl möglicher Anwendungen von Lignin, wie beispielsweise die Herstellung von Vanillin oder Kohlefasern oder auch Anwendungen wie der Einsatz als Stärkeersatzstoffe bei der Herstellung von Papier auf der Papiermaschine. Das nachhaltige Implementieren von Lignin in die Produktion unterschiedlichster Substanzen bzw. in die unterschiedlichsten Verfahren ist derzeit weltweit Gegenstand von sehr intensiven Forschungsaktivitäten, jedoch wurde bis dato kein kommerziell verfügbares Lignin-Produkt sowie ökonomisch führbares Verfahren für aus dem Kraftprozess stammendes Lignin gefunden. Dies deshalb, da bei der Verwendung von Lignin, das aus dem Kraftprozess stammt, verschiedenste Schwierigkeiten auftreten, wie der charakteristische Geruch und die Farbe des Produkts, ebenso wie die sich ändernde Qualität des gewonnen Lignins, welche auf das unterschiedlich eingesetzte Roh- bzw. Ausgangsmaterial für das Kochverfahren ebenso wie auf Unterschiede in den Aufarbeitungsverfahren zurückzuführen sind. Gegenwärtig wird Lignin ausschließlich für das Befeuern des Chemikalien-Rückgewinnungskochers verwendet und wenn es gefällt und gereinigt wurde, wie dies beispielsweise durch das Lignoforce-Verfahren der NORAM Gruppe durchgeführt wird, kann es als Brennmaterial in dem Kalkofen eingesetzt werden, da hier CO₂ Einsparungen und eine höhere Anlagenproduktivität erwartet werden.

Verfahren gemäß dem Stand der Technik zur Isolierung von Lignin aus alkalischen Prozessströmen, wie beispielsweise aus dem Zellstoffverfahren stammender Schwarzlauge sind in der Literatur vielfach beschrieben. Die bekanntesten dieser Verfahren sind das sogenannte LignoBoost-Verfahren (Marke der Firma Valmet Aktiebolag (WO 2012/049375 A1 oder WO 2014/116150 A1)) und das Lignoforce-Verfahren der NORAM Gruppe, welche, um ökonomisch arbeiten zu können, unter Druck gesetztes synthetisches Kohlendioxid für die Fällung von Lignin aus dem alkalischen Prozessstrom verwenden. Sowohl das LignoBoost- als auch das Lignoforce-Verfahren, welche beide weit verbreitet verwendet werden, können jedoch nur diskontinuierlich geführt werden, um Lignin mit halbwegs reproduzierbaren Qualitäten zu erzeugen, was sowohl den apparativen Aufwand als auch die Produktivität in Bezug auf Lignin nachteilig beeinflusst. Es werden daher weiterhin Verfahren gesucht welche einerseits kontinuierlich Lignin mit gleichbleibender Qualität aus einem alkalischen Prozessstrom herstellen bzw. rückgewinnen können, andererseits sowohl den apparativen als auch den Energieaufwand so gering wie möglich halten.

Ein weiterer Nachteil von bekannten Verfahren gemäß dem Stand der Technik ist nicht nur deren diskontinuierliche Arbeitsweise sondern vor allem das Problem, dass durch das Einblasen ein Schäumen in dem Reaktor auftritt, welches nur durch die Fahrweise des Reaktors unter Überdruck so weit in Griff gehalten werden kann, wodurch das Verfahren nicht nachteilig beeinflusst wird.

Der US 9,139,606 B2 bzw. der dieser zugrunde liegenden WO 2012/049375 A1 ist bereits ein kontinuierliches Verfahren zur Fällung von Lignin aus einer Schwarzlauge entnehmbar, bei welchem Schwarzlauge in einem Durchflussdruckreaktor mit einer Verweilzeit von weniger als 300 s mit einem Ansäuerungsmittel versetzt wird. Nach einem abrupten Entspannen des Drucks fällt Lignin aus der mit Säure versetzten Schwarzlauge aus. Nachteilig an diesem Verfahren ist die Verwendung eines Druckreaktors, welcher sowohl aus der energetischen Sicht als auch aus der Sicht der Handhabung im großtechnischen Einsatz nicht vorteilhaft ist.

Zusammenfassend ergibt sich somit aus der Vielzahl von bereits bekannten Verfahren, dass jene Verfahren, welche bei Umgebungsdruck arbeiten, ein großes Problem mit dem während der Umsetzung gebildeten Schaum in dem Reaktor zu bewältigen haben, und jene Verfahren, welche eine kontinuierliche Ligninfällung aus alkalischen Prozessfluiden ermöglichen, bei erhöhtem Druck bzw. Druckwechsel arbeiten müssen. Es erübrigt sich festzuhalten, dass selbstverständlich auch weitere Verfahren zur Fällung von Lignin, beispielsweise unter Verwendung von Ionentauschern in der Literatur beschrieben sind, welche jedoch allesamt als nicht besonders wirtschaftlich zu bezeichnen sind.

Es besteht daher das Erfordernis, eine weitere Verbesserung an den bekannten Verfahren zur Fällung von Lignin aus einem alkalischen Prozessstrom zur Verfügung zu stellen, mit welcher es einerseits gelingt, eine möglichst einfache Verfahrensführung sowohl in Bezug auf die Verfahrensschritte als auch in Bezug auf den apparativen Aufwand, zur Verfügung zu stellen, welche überdies einen geringen Einsatz von Energie erfordert und bei Umgebungsdruck kontinuierlich geführt werden kann.

Zur Lösung dieser Aufgabe ist das erfindungsgemäße Verfahren im Wesentlichen dadurch gekennzeichnet, dass der alkalische Prozessstrom in einem unteren Bereich von wenigstens einem zwei konzentrisch angeordnete Reaktorzonen aufweisenden Kreislaufreaktor kontinuierlich eingebracht wird, dass ein Flüssigkeitsniveau des alkalischen Prozessstroms im Inneren des wenigstens einen Kreislaufreaktors im Wesentlichen auf einem Niveau mit einem Oberende von wenigstens einer inneren rohrförmigen Reaktorzone gewählt wird, dass ein CO₂ haltiges Gas von unten in die wenigstens eine innere rohrförmige Reaktorzone des wenigstens einen Kreislaufreaktors kontinuierlich eingeblasen wird, dass das CO₂ haltige Gas in der wenigstens einen inneren rohrförmigen Reaktorzone von dem alkalischen Prozessstrom absorbiert wird und Abgas gemeinsam mit Restmengen des CO₂ am Kopf des wenigstens einen Kreislaufreaktors abgezogen werden, dass das Verfahren bei Umgebungsdruck geführt wird und dass die an Lignin verarmte eingedickte Schwarzlauge gemeinsam mit darin enthaltenem ausgefällten Lignin gegebenenfalls nach einem Absitzen lassen, am Boden des wenigstens einen Kreislaufreaktors abgezogen werden. Neben der gewählten Art des Einbringens der Prozessströme, nämlich dass der alkalische Prozessstrom kontinuierlich in einem unteren Bereich eines wenigstens zwei konzentrisch angeordnete Reaktorzonen aufweisenden Kreislaufreaktors eingebracht wird und gleichzeitig kontinuierlich ein CO₂ haltiges Gas von unten im Wesentlichen ausschließlich in die wenigstens eine innere rohrförmige Reaktorzone des Kreislaufreaktors eingeblasen wird, gelingt es, das Verfahren so zu führen, dass das CO₂ haltige Gas, insbesondere das CO₂ des CO₂ haltigen Gases sukzessive in der alkalischen Prozesslauge absorbiert und so der pH-Wert derselben abgesenkt wird, wodurch nach Unterschreiten eines GrenzpH-Werts für die Ausfällung von Lignin, der im Bereich von etwa 8 bis 13, insbesondere etwa pH 9 bis 11 bei einer Raumtemperatur von 25 °C liegt, Lignin aus der alkalischen Prozesslauge ausgefällt wird. Das im Wesentlichen ausschließlich in die wenigstens eine innere Reaktorzone eingeblasene CO₂ steigt in dieser Reaktorzone nach oben in Richtung zu einem Gasauslass auf, bewegt dabei die eingedickte Schwarzlauge, in welche es eingeblasen wird mit nach oben und bewirkt dadurch den Kreislaufstrom der eingebrachten Schwarzlauge, ohne dafür eine Pumpeinrichtung vorzusehen. Überraschend ist bei dieser Art der Verfahrensführung, dass trotz der Verfahrensführung bei Normaldruck das üblicherweise in derartigen Verfahren zur Isolierung von Lignin aus alkalischen Prozessströmen auftretende starke Schäumen nahezu vollständig unterdrückt werden kann. Bei der gewählten Verfahrensführung und durch den Einsatz des Kreislaufreaktors findet die Absorption von CO₂ vor allem in der inneren rohrförmigen Reaktorzone statt und das Absitzen lassen von Lignin gelingt in der Folge, insbesondere aufgrund der langsamen Kreislaufführung, die durch den Normaldruck im Inneren des Reaktors bewirkt wird, in der äußeren ringförmigen Reaktorzone des Kreislaufreaktors. Besonders effizient kann das Schäumen hierbei dadurch unterdrückt werden, dass das Reaktordesign so gewählt ist, dass das Oberende der inneren rohrförmigen Reaktorzone das Flüssigkeitsniveau in dem Kreislaufreaktor nicht übersteigt und der Flüssigkeitsstrom einfach in die äußere Reaktorzone fließen gelassen wird. Bei einer derartigen Verfahrensführung bzw. mit einem derartigen Reaktordesign wird Schaum, welcher während der CO₂ Absorption gebildet wird, unmittelbar nach seiner Bildung aufgrund der Trennung zwischen flüssiger Phase mit Feststoffen und flüssiger Phase mit CO₂ am Oberende der inneren rohrförmigen Reaktorzone wiederum zerstört, so dass die Schaumbildung bei der im äußeren ringförmigen Bereich des Kreislaufreaktor stattfindenden Ligninfällung keinen negativen Einfluss mehr haben kann.

Die Führung des erfindungsgemäßen Verfahrens ist unabhängig von der gewählten Anzahl der inneren rohrförmigen Reaktorzonen und je nach Größe und angestrebtem Durchsatz des Kreislaufreaktors können lediglich eine innere rohrförmige Reaktorzone oder aber auch eine Mehrzahl derselben vorgesehen sein.

Indem weiterhin das in der äußeren ringförmigen Reaktorzone des Kreislaufreaktors ausgefällte Lignin entweder im Kreislaufreaktor direkt absitzen gelassen wird, in welchem Fall der Boden des Kreislaufreaktors insbesondere konisch ausgebildet wird, oder aber Lignin gemeinsam mit dem an Lignin verarmten alkalischen Prozessstrom aus dem Reaktor ausgetragen wird, gelingt es, ein Ligninfällungsverfahren zur Verfügung zu stellen, welches kontinuierlich in einer apparativ einfachen Vorrichtung durchgeführt wird, in welcher überdies keinerlei bewegliche Teile, wie beispielsweise Rührer oder dgl. für die Durchführung des Verfahrens von Nöten sind.

Unter Kreislaufreaktor wird im Zusammenhang mit der vorliegenden Erfindung ein Reaktor verstanden, welcher im Wesentlichen eine zylindrische Form aufweist, in dessen Inneren eine rohrförmige Reaktorzone angeordnet ist, deren Oberende unter dem Oberende des Zylinders endet und einen ringförmigen Spalt für die Kreislaufführung von Material freilässt. Im Prinzip arbeitet ein derartiger Reaktor auf dem Prinzip einer Mammutpumpe und eines Lufthebe-reaktors bzw. einer Kombination aus diesen beiden Vorrichtungen, wobei irgendwelche beweglichen Teile im Inneren des Kreislaufreaktors nicht vorgesehen sind. Einbauten, wie Messfühler, Steuer- und Regeleinrichtungen ebenso wie eine Möglichkeit den Reaktor als Doppelmantelvorrichtung oder auch nur mit einer Hülle auszubilden, sind hierbei mitumfasst und beeinflussen die Verfahrensführung nicht. Schließlich kann der Kreislaufreaktor als ein Reaktor mit Innenkreislauf ebenso wie mit einem Außenkreislauf geführt werden, wobei sich lediglich die Aufgabeseiten von Gas und alkalischem Prozessstrom umkehren. Auch durch eine derartige apparative Veränderung werden die kontinuierliche Verfahrensführung und das damit erzielbare Ergebnis nicht beeinflusst.

Indem das Verfahren so geführt wird, dass der alkalische Prozessstrom den Kreislaufstrom in dem Kreislaufreaktor ausbildet, kann aufgrund der durch die Aufgabemenge des alkalischen Prozessstroms gesteuerte Umlaufgeschwindigkeit im Inneren des Reaktors auch die für eine Umsetzung/Zeiteinheit verfügbare Menge an alkalischem Prozessstrom eingestellt werden, so dass gleichbleibende Verfahrensbedingungen aufrecht erhalten werden können und somit auch gleichbleibende Produktqualitäten erzielbar sind. Hierbei wird in der inneren rohrförmigen Reaktorzone ein Ansäuern des alkalischen Prozessstroms durch Absorption des eingebrachten CO₂ in dem Prozessstrom und Umwandlung der basischen Bestandteile in sauer reagierende Bestandteile erreicht. Durch das nach oben Steigen des CO₂ haltigen Gases im Inneren der inneren rohrförmigen Reaktorzone des Kreislaufreaktors wird der alkalische Prozessstrom zwangsweise in Bewegung gesetzt und über die Oberkante der inneren rohrförmigen Reaktorzone in die äußere ringförmige Reaktorzone des Kreislaufreaktors fließen. In diesem Bereich, welcher im Wesentlichen frei von aufsteigendem CO₂ ist, wird ein ruhiger, vorzugsweise laminarer Strom der alkalischen Prozesslauge bzw. des Prozessstroms ausgebildet, der nunmehr aufgrund des erniedrigten pH-Werts und somit Überschreiten des Löslichkeitsprodukts von Lignin, ausgefälltes Lignin enthält, das in Richtung zu einem am Boden wenigstens eines Kreislaufreaktors vorgesehenen Ablaufs geführt wird, bzw. sedimentieren gelassen wird. Durch diese Kreislaufführung des alkalischen Prozessstroms, welcher nur in den inneren Bereich des Kreislaufs mit CO₂ in Kontakt kommt, gelingt es einerseits, das Schäumen desselben zu verhindern, das Ansäuern des Prozessstroms gezielt vorzunehmen und insbesondere die Verweilzeit des Prozessstroms aufgrund des im System herrschenden Normaldrucks, nur in Abhängigkeit des Zustroms, ausreichend langsam zu wählen, wodurch eine gezielte Ausfällung von Lignin, insbesondere der gewünschten Ligninqualität aus dem alkalischen Prozessstrom erreichet werden kann. Weiterhin gelingt es mit dieser Verfahrensführung und dem speziellen Reaktordesign sowohl den Prozessstrom als auch die Verweilzeit des CO₂ durch Einstellung der Höhe der inneren rohrförmigen Reaktorzone zu steuern bzw. zu regeln.

Indem weiterhin das Verfahren so geführt wird, dass es bei Umgebungsdruck, insbesondere bei 1 atm durchgeführt wird, gelingt eine weitere apparative Vereinfachung des Reaktorsystems. Weiterhin wird durch die Führung des Verfahrens bei Normaldruck, d.h. einer Atmosphäre die Energiebilanz des Verfahrens gegenüber herkömmlichen Verfahren deutlich verbessert.

Indem das Verfahren so geführt wird, dass eine Geschwindigkeit der CO₂ Absorption in der eingedickten Schwarzlauge durch eine CO₂ Konzentration in dem CO₂ haltigen Gas gesteuert bzw. geregelt wird, gelingt es je nach Menge bzw. Konzentration des zugesetzten CO₂ den pH-Wert des alkalischen Prozessstroms bzw. der eingedickten Schwarzlauge beliebig schnell abzusenken. Die Geschwindigkeit der Absenkung des pH-Werts ist hierbei direkt proportional der Menge des zugesetzten CO₂. Mit einer derartigen Verfahrensführung gelingt es, die Geschwindigkeit des Ausfällens von Lignin aus dem alkalischen Prozessstrom zu steuern bzw. zu regeln, nämlich dahingehend, dass die Übersättigung der Lösung an CO₂ direkt proportional zum Teilchenwachstum des ausgefällten Lignins ist, wodurch auch die Qualität und die Produkteigenschaften des gefällten Lignins beeinflusst werden können. Weiterhin wird aufgrund der Erhöhung der Umlaufgeschwindigkeit durch die größere vorhandene Menge an Gas ein Absitzen der gebildeten Ligninteilchen in dem Umlaufreaktor erschwert, so dass diese beispielsweise mit dem Prozessstrom aus dem Reaktor ausgetragen werden können und in einem gesonderten Absetzbehälter absitzen lassen und abgetrennt werden können. Wenn beispielsweise die Überschussmenge an CO₂ gering ist und dadurch auch der Kreislaufstrom verlangsamt wird, wird eine Agglomerierung der Ligninteilchen bereits in dem Kreislaufreaktor erreicht und größere Mengen bzw. insbesondere größere Ligninpartikel ausgefällt. Aufgrund der geringen Umlaufgeschwindigkeit in dem Kreislaufreaktor sind auch die Scherkräfte in dem abwärts gerichteten Strom in dem Äußeren der konzentrisch angeordneten Reaktorzonen extrem gering, so dass die gebildeten Ligninagglomerate auch nicht wieder zerstört werden, was ein weiterer Vorteil gegenüber der Verfahrensweise gemäß dem Stand der Technik darstellt, da bei einer derartigen Verfahrensführung ein Alterungsschritt für die gebildeten Ligninteilchen, welcher bis dato immer erforderlich war, weggelassen werden kann. Lediglich der Ordnung halber ist festzuhalten, dass nicht nur Kohlendioxid bzw. seine Konzentration einen maßgeblichen Einfluss auf die Ligninfällung besitzt sondern diese Fällung auch temperaturabhängig ist. So wird bei höheren Temperaturen ein gut filtrierbares Lignin erhalten und bei niedrigeren Temperaturen ein schwer filtrierbares Produkt.

Indem, wie dies einer Weiterbildung der Erfindung entspricht, für die Absenkung des pH-Werts verdünntes CO₂, insbesondere Abgase aus CO₂ produzierenden Anlagen, wie z.B. einem Kalkofen in den Kreislaufreaktor eingebracht wird, gelingt es einerseits in der Anlage vorhandene Abgase sinnvoll weiterzuverwenden und andererseits wird durch Zusatz von verdünntem CO₂ die Absorptionsrate in dem alkalischen Prozessstrom abgesenkt, wodurch eine gezieltere Ausfällung der gewünschten Ligninqualität erreicht werden kann. Weiterhin führt die Verwendung von aus der Anlage stammenden CO₂ Abgasen zu einem abgesenkten bzw. verringerten Kohlenstofffußabdruck der Anlage, was nicht nur aus Umweltgründen vorteilhaft ist, sondern auch die Prozess- und Produktionskosten für Lignin deutlich absenken. Es erübrigt sich festzuhalten, dass das im Abgas des Kreislaufreaktors enthaltene CO₂ wiederum beispielsweise in den Kalkofen rückgeführt werden kann.

Der Ausdruck "verdünntes CO₂, insbesondere Abgase aus CO₂ produzierenden Anlagen" wird im Zusammenhang mit der vorliegenden Erfindung so verstanden, dass weitere üblicherweise in Abgasen vorhandene Bestandteile, wie SO₂, CO, NOx, O₂ und N₂ nicht gesondert erwähnt werden, diese jedoch ohne vorherige Reinigung der Abgase in dem Verfahren mitverwendet werden und die kontinuierliche Verfahrensführung ebenso wie das erzielte Ergebnis nicht nachteilig beeinflussen.

Gemäß einer Weiterbildung der Erfindung wird das Verfahren bei einer Temperatur zwischen 30 und 80 °C, insbesondere zwischen 65 und 75 °C durchgeführt. Indem die Temperaturen zwischen 30 und 80 °C, vorzugsweise zwischen 65 und 75 °C gewählt werden, werden milde Verfahrensbedingungen gewählt, was sicherstellt, dass das gebildete Lignin, aufgrund der großen gebildeten Agglomerate bzw. Flocken, aus dem Reaktor gut entfernt werden kann. Insbesondere wenn die bevorzugte Temperatur im Bereich von nicht höher als 75 °C gewählt wird, gelingt es, Lignin unter seinem Glasübergangspunkt auszufällen und gleichzeitig die Ausbildung einer weiteren, dritten Phase, welche bei einer Fällung von Lignin über der Glasübergangstemperatur entstehen würde, zu vermeiden. Vorzugsweise wird das Verfahren daher mit einer Temperatursteuerung bzw. unter kontinuierlicher Temperaturkontrolle durchgeführt werden, um die Qualität des ausgefällten Lignins zu optimieren. Eine Temperatursteuerung ist hierbei insbesondere deshalb erforderlich, da die Temperaturen der eingebrachten Abgase üblicherweise deutlich über der gewünschten Maximaltemperatur von 80°C liegen. Zur Temperatursteuerung können hierbei jegliche bekannten Einrichtungen, wie Wärmetauscher, temperierte Reaktionskessel, Kühler oder dgl. verwendet werden.

Indem, wie dies einer Weiterbildung der Erfindung entspricht, das Verfahren so geführt wird, dass eine auszufällende Ligninqualität durch ein pH-Wert Regelung mit CO₂ als einem alleinigen Ansäuerungsmittel auf Werte zwischen 13 und 8, vorzugsweise zwischen 11 und 9, eingestellt wird, gelingt es, die Qualität des aus dem alkalischen Prozessstrom ausgefällten Lignins zu beeinflussen. Wie in der Fachwelt bekannt ist, ändert sich die Molmasse von Lignin ebenso wie die im Lignin vorhandenen, funktionellen Gruppen in Abhängigkeit von dem pH-Wert. So wird bei relativ hohen pH-Werten ein Lignin mit einer großen Molmasse gebildet, wobei sich die Molmasse mit sinkendem pH-Wert immer weiter verringert. In Abhängigkeit von der Menge des CO₂ als Ansäuerungsmittel in dem alkalischen Prozessstrom kann nunmehr der pH-Wert des Prozessstroms gezielt eingestellt werden und somit auch die gewünschte Ligninqualität gezielt eingestellt werden. So kann bei Verwendung von stark verdünntem CO₂ ein Lignin mit hoher Molmasse ausgefällt werden, wohingegen bei Durchleiten von großen Mengen CO₂ die Molmasse von Lignin stark abgesenkt werden. Neben der Änderung der Molmasse ändern sich, wie ausgeführt, auch die an dem Lignin vorhandenen funktionellen Gruppen, weshalb mit einer derartigen Verfahrensführung tatsächlich ein maßgeschneidertes Lignin aus dem alkalischen Prozessstrom, insbesondere der eingedickten Schwarzlauge ausgefällt werden kann. Überdies, wie sich dies aus dem obigen Ausführungen klar ergibt, kann auch eine fraktionierte Fällung von Lignin in ein und demselben Kreislaufreaktor durchgeführt werden und somit, insbesondere wenn nur kleine Mengen eines Lignins mit besonderer Qualität erforderlich sind, diese Qualität durch Einstellung des pH-Werts, mit Hilfe des durch den alkalischen Prozessstrom geleiteten CO₂ Menge, gewonnen werden.

In diesem Zusammenhang ist festzuhalten, dass die Regelung des Reaktors nicht nur mit Hilfe der Menge an durchgeleitetem CO₂, sondern auch über die Menge an eingebrachter Mutterlauge, d.h. ein zugefügter eingedickter Schwarzlauge gesteuert bzw. geregelt werden kann.

Insbesondere wenn beabsichtigt ist, verschiedene Ligninfraktionen aus dem alkalischen Prozessstrom auszufällen, wird das Verfahren gemäß einer Weiterbildung der Erfindung so geführt, dass eine Mehrzahl von Kreislaufreaktoren in einer Kaskade hintereinander angeordnet wird, dass die am Boden des jeweiligen in der Kaskade stromaufwärts angeordneten Kreislaufreaktors abgezogene an Lignin wenigstens teilweise verarmte alkalische Prozessstrom, insbesondere die eingedickte Schwarzlauge dem jeweiligen stromabwärts folgenden nächsten Kreislaufreaktor aufgegeben wird und dass in den in der Kaskade von stromaufwärts nach stromabwärts aufeinanderfolgenden Kreislaufreaktoren ein pH-Wertgefälle aufrecht erhalten wird. Mit einer derartigen Anordnung bzw. Verfahrensführung ist eine fraktionierte Ligninfällung durch stufenweise Absenkung des pH-Werts von den stromaufwärts gerichteten Kreislaufreaktoren zu dem jeweils stromabwärts nächstgelegenen Kreislaufreaktor möglich. Dadurch können bei einer kontinuierlichen Fahrweise des Reaktors verschiedene Ligninqualitäten aus dem alkalischen Prozessstrom gewonnen werden.

Bei einer derartigen stufenweisen Führung des Verfahrens wird, wie dies einer Weiterbildung der Erfindung entspricht, so vorgegangen, dass das pH-Wertgefällte durch die CO₂ Konzentration in dem CO₂ haltigen Gas eingestellt wird, wobei dem am weitesten stromaufwärts angeordneten Kreislaufreaktor die geringste CO₂ Konzentration aufgegeben wird. Die Einstellung der CO₂ Konzentration in dem CO₂ haltigen Gas kann hierbei entweder so erfolgen, dass jedem der Kreislaufreaktoren in der Kaskade Abgas aus beispielsweise der Zellstoffherstellung aufgegeben wird, wobei darauf geachtet wird, dass die CO₂ Konzentration sukzessive ansteigt, oder aber eine Mischung aus Abgas und Frischgas, wodurch eine noch exaktere Einstellung der CO₂ Konzentration und somit eine gezieltere Fällung der jeweils gewünschten Ligninqualität erreicht werden kann.

Um eine besonders vollständige Abtrennung des ausgefällten Lignins zu erreichen und insbesondere eine Kreislaufführung von ausgefälltem Lignin so weit als möglich zu vermeiden, wird das Verfahren gemäß einer Weiterbildung der Erfindung so geführt, dass das Absitzen lassen von ausgefälltem Lignin in einem gesonderten, insbesondere konusförmigen Absetzbehälter durchgeführt wird. Das abgesetzte Lignin kann aus diesem Absetzbehälter, insbesondere am Boden desselben abgezogen werden und entweder nach einer Aufreinigung oder unmittelbar weiterverwendet werden.

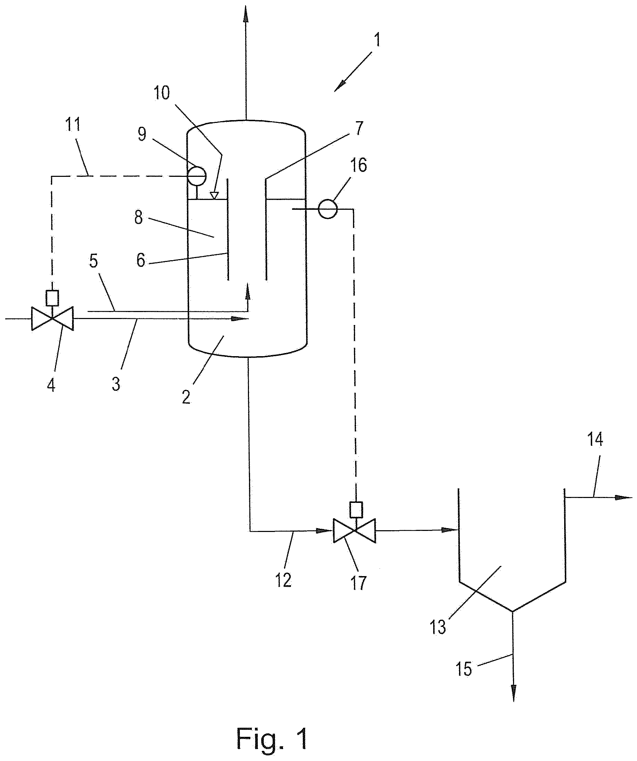

Die Erfindung wird nachfolgend anhand eines Ausführungsbeispiels näher erläutert, dessen Verfahrensführung anhand der Prinzipskizze, der für die Durchführung des Verfahrens erforderlichen Vorrichtung, wie sie in Fig. 1 dargestellt ist, gezeigt wird.

Fig. 1 zeigt eine Prinzipskizze eines kontinuierlichen Kreislaufreaktors mit angeschlossenem Absetzbehälter, welcher zur Fällung von Lignin aus einem alkalischen Prozessstrom eingesetzt werden kann.

In einen Kreislaufreaktor 1 wird im Bodenbereich 2 desselben aus einer Verdampfung stammende Schwarzlauge über die Leitung 3 aufgegeben. Die eingedickte Schwarzlauge, die bei 3 in den Kreislaufreaktor 1 aufgegeben wird, hat hierbei einen Gehalt an Trockensubstanz von etwa 20 bis 40 Gew.-% und stammt aus einer Zelluloseherstellung. Um den Zufluss der eingedickten Schwarzlauge steuern bzw. regeln zu können, ist überdies ein Steuer- bzw. Regelventil 4 in der Zulaufleitung 3 vorgesehen. Die Temperatur der eingedickten Schwarzlauge, welche in dem Bodenbereich 2 des Kreislaufreaktors 1 aufgegeben wird, liegt hierbei zwischen 55°C und 80°C und wird vor ihrem Aufgeben temperiert. Normalerweise wird die eingedickte Schwarzlauge mit der aus der Verdampfung stammenden Temperatur in den Reaktor eingebracht. Für die Umsetzung mit Kohlendioxid, insbesondere die Ausfällung von Lignin mit Hilfe von CO₂ ist hierbei zu beachten, dass, je höher die Temperatur der eingedickten Schwarzlauge und somit die Temperatur der Prozessführung in dem Kreislaufreaktor 1 ist, desto schneller wird CO₂ durch die eingedickte Schwarzlauge absorbiert.

Ebenfalls im Bodenbereich 2 des Kreislaufreaktors 1 wird CO₂ über die Leitung 5 aufgegeben. Die Mündung der Leitung 5 ist hierbei so im Inneren des Reaktors 1 angeordnet, dass sie im Wesentlichen am unteren Ende einer inneren rohrförmigen Reaktorzone 6 mündet. Dadurch, dass die Leitung 5 zum Einbringen von CO₂ am unteren Bereich der inneren rohrförmigen Reaktorzone 6 des Kreislaufreaktors 1 mündet, wird sichergestellt, dass CO₂ im Wesentlichen nur in diese innere rohrförmige Reaktorzone 6, beispielsweise mittels eines Siebbodens, einer Fritte oder eines Regelventils eingebracht wird und durch den CO₂ Eintrag einerseits die Umsetzung von eingedickter Schwarzlauge mit CO₂ in Gang gesetzt wird und andererseits auch die Kreislaufbewegung in dem Kreislaufreaktor 1 in Gang gesetzt wird. Dies erfolgt dadurch, dass CO₂ im Inneren der rohrförmigen Reaktorzone 6 aufsteigt und während des Aufsteigens Schwarzlauge mitreißt, welche in der Folge, nachdem das Oberende 7 der inneren rohrförmigen Reaktorzone 6 erreicht wurde, über dieses Oberende 7 in den äußeren ringförmigen Bereich 8 des Kreislaufreaktors 1 fließt und dadurch einen Materialkreislauf in Gang setzt. Da das Verfahren, d.h. die Umsetzung eines alkalischen Prozessstroms bzw. von eingedickter Schwarzlauge mit CO₂ bei Normaldruck geführt wird, hängt das Ausmaß der Umsetzung bzw. die Ansäuerungsrate der eingedickten Schwarzlauge mittels CO₂ einerseits von der Temperatur der eingebrachten, eingedickten Schwarzlauge und des eingebrachten Gases ab und andererseits von der Verweilzeit von CO₂ im Inneren des Kreislaufreaktors 1, insbesondere im Inneren der inneren rohrförmigen Reaktorzone 6.

Bei Betrieb des Kreislaufreaktors 1 bei Normaldruck ist die Höhe bzw. Länge der inneren rohrförmigen Reaktorzone 6 direkt proportional der Verweilzeit von CO₂ im Inneren dieser Zone und somit der Umsetzungszeit, welche für CO₂ mit der eingedickten Schwarzlauge zur Verfügung steht. Je länger diese Umsetzungszeit ist, desto niedriger wird der pH-Wert der eingedickten Schwarzlauge und über diese pH-Wertsteuerung bzw. -regelung gelingt es weiterhin, die Qualität an ausgefälltem Lignin zu beeinflussen. Wenn die innere rohrförmige Reaktorzone 6 ausreichend hoch bzw. lang gewählt wird, kann eine maximale Absorption von CO₂ im Inneren dieser Reaktorzone 6 stattfinden, so dass ein Abgas, welches am Oberende 7 der inneren Reaktorzone 6 austritt, im Wesentlichen keinerlei CO₂ mehr enthält. Indem die Höhe der inneren rohrförmigen Reaktorzone 6 als ein Steuer- bzw. Regelelement herangezogen wird, ist es in der Folge wichtig, die Höhe des Flüssigkeitsvolumens im Inneren des Kreislaufreaktors 1 zu kennen, da über die Höhe des Flüssigkeitsvolumens in dem Reaktor, d.h. wieviel Flüssigkeit wird einströmen gelassen, bevor die Reaktion begonnen wird bzw. wie ist das Verhältnis zur Ausströmgeschwindigkeit der eingetragenen, eingedickten Schwarzlauge, die Verfahrensführung gesteuert bzw. geregelt und insbesondere eine Niveausteuerung des Reaktors vorgenommen. Eine derartige Niveausteuerung kann hierbei, wie dies als fakultatives Element in der Fig. 1 gezeigt ist, so stattfinden, dass über einen Niveausteuer- bzw. -regelsensor 9 das Flüssigkeitsniveau 10 im Inneren des Kreislaufreaktors 1 gemessen wird, wenn das Flüssigkeitsniveau 10 einen vorbestimmten Maximalwert erreicht hat, wird das Zulaufventil 4 für den weiteren Zulauf von frischer eingedickter Schwarzlauge gesperrt und das Überschussniveau an eingedickter Schwarzlauge über die Bypassleitung 11 wiederum in die Zulaufleitung 3 für ein eingedickte Schwarzlauge eingespeist. Mit dieser Niveausteuer- bzw. -regeleinrichtung gelingt es, das Niveau im Inneren des Kreislaufreaktors 1 immer konstant zu halten und somit eine gezielte, immer gleichbleibende Umsetzung der eingetragenen, eingedickten Schwarzlauge mit CO₂ und somit eine gleichbleibende Produktqualität des ausgefällten Lignins zu erreichen.

Ausgefälltes Lignin gemeinsam mit an Lignin verarmter, eingedickter Schwarzlauge werden am Boden des Kreislaufreaktors 1 über die Leitung 12 abgezogen und in der Prinzipskizze 1 von Fig. 1 in einen Absetzbehälter 13 überführt, in welchem Lignin sedimentieren gelassen wird. Das sedimentierte Lignin wird bei 15 aus dem Absetzbehälter abgezogen und die überstehende Flüssigkeit wird beispielsweise über Leitung 14 einer Weiterbehandlung zugeführt. Der aus dem Absetzbehälter 13 bei Leitung 15 abgezogene, ligninreiche Schlamm wird der weiteren Reinigung unterzogen und das Lignin zu einer Endverwendung zugeführt. Anstelle der in Fig. 1 gezeigten Verfahrensführung ist es selbstverständlich möglich, das Reaktordesign des Kreislaufreaktors 1 mit beispielsweise einem konischen Boden auszubilden, dort Lignin absetzen zu lassen, um die an Lignin verarmte, restliche, eingedickte Schwarzlauge im oberen Bereich des Reaktors, in etwa auf der Höhe des Einbringens der Schwarzlauge abzuziehen, einem weiteren Kreislaufreaktor zuzuführen und das Verfahren als eine Kaskade zu führen, wodurch durch immer stärkeres Ansäuern der eingedickten Schwarzlauge jedes Mal andere Ligninqualitäten gefällt werden können.

Schließlich kann, um die ausgefällte Ligninqualität noch exakter steuern bzw. regeln zu können, das Verfahren in dem Kreislaufreaktor 1 mittels einer pH-Wert Kontrolle durchgeführt werden. Hierzu wird in der äußeren Reaktorzone 8 eine kontinuierliche pH-Wertmessung bei 16 durchgeführt und wenn die Messung des pH-Werts ergibt, dass der pH-Wert für die gewünschte, auszufällende Ligninqualität zu niedrig wird, ein in der Ablaufleitung 12 vorgesehenes Ventil 17 geöffnet wird, um möglichst rasch möglichst viel des Produktstroms abzuziehen. Gleichzeitig kann beispielsweise der Zulauf von CO₂ gestoppt werden. Wenn der pH-Wert im Inneren des Reaktors 1, nachdem das CO₂ den Kopf der inneren rohrförmigen Reaktorzone 6 erreicht hat, nach wie vor zu hoch ist, um die gewünschte Ligninqualität zu erreichen, kann demgegenüber das Ventil 17 in der Ablaufleitung 12 so gestellt werden, dass ein weiteres Ablaufen von aus dem Kreislaufreaktor 1 stammender, an Lignin verarmter Schwarzlauge verhindert wird und der Kreislaufstrom durch Einblasen von CO₂ so lange weitergeführt wird, bis der gewünschte pH-Wert erreicht wird. Es erübrigt sich festzuhalten, dass in diesem Fall auch das Ventil 4 in der Zulaufleitung für eingedickte Schwarzlauge geschlossen werden muss, da ansonsten eine Überschussmenge an eingedickter Schwarzlauge im Inneren des Kreislaufreaktors 1 vorhanden wäre.

Wenn das Verfahren gemäß der Erfindung in einer Kaskade von Kreislaufreaktoren 1 geführt wird, kann gezielt der pH-Wert in dem einzelnen Kreislaufreaktor 1 durch die oben beschriebene Verfahrensweise eingestellt werden und somit in jedem einzelnen der Kreislaufreaktoren 1 eine gezielte Ligninqualität ausgefällt werden. Wie in der Fachwelt bekannt, wird Lignin mit hohen Molmassen bei relativ hohen pH-Werten ausgefällt, wohingegen Lignin mit niedrigen Molmassen bei niedrigeren pH-Werten ausgefällt wird.

Zusammenfassend ist somit festzuhalten, dass es mit der Verfahrensführung gemäß der Erfindung möglich ist, erstens die CO₂ Absorption durch die Höhe der inneren rohrförmigen Reaktorzone 6 zu steuern bzw. zu regeln, zweitens die Geschwindigkeit der CO₂ Absorption mit Hilfe der Temperatur, welche im Inneren des Kreislaufreaktors 1 herrscht, zu steuern bzw. zu regeln, wobei bei Temperaturen von über 80 °C die Glasübergangstemperatur von Lignin bereits überschritten wird und die Produktqualität verschlechtert wird. Vorzugsweise wird daher die Fällung bei Temperaturen zwischen 65 °C und 75 °C durchgeführt. Drittens ist es möglich, das Verfahren mittels einer Niveausteuerung zu steuern bzw. zu regeln, viertens das Verfahren über eine pH-Wert Steuerung bzw. Regelung zu steuern bzw. zu regeln und fünftens das Verfahrens in einer Kaskade von einer Mehrzahl von Kreislaufreaktoren 1 auszubilden, wodurch eine fraktionierte Fällung von Lignin aus dem alkalischen Prozessstrom, insbesondere eingedickter Schwarzlauge erreicht werden kann, welches Lignin in der Folge ganz gezielten Verwendungen zugeführt werden kann. Es kann beispielsweise das Lignin nach seiner Fällung oxidiert werden, woraus wasserunlösliches oder konzentriertes wasserlösliches Lignin erhalten werden kann. In gleicher Weise kann das Verfahren über einen Ionentauscher geführt werden, so dass das Lignin in bekannter Weise beispielsweise wiederum in den Kalkofen als Brennstoff rückgeführt werden kann.

## Patentansprüche

1. Verfahren zur kontinuierlichen Isolierung von Lignin aus einem aus eingedickter Schwarzlauge bestehenden alkalischen Prozessstrom, **dadurch gekennzeichnet, dass** der alkalische Prozessstrom in einem unteren Bereich von wenigstens einem zwei konzentrisch angeordnete Reaktorzonen aufweisenden Kreislaufreaktor (1) kontinuierlich eingebracht wird, dass ein Flüssigkeitsniveau (10) des alkalischen Prozessstroms im Inneren des wenigstens einen Kreislaufreaktors (1) im Wesentlichen auf einem Niveau mit einem Oberende (7) von wenigstens einer inneren rohrförmigen Reaktorzone (6) gewählt wird, dass ein CO₂ haltiges Gas von unten in die wenigstens eine innere rohrförmige Reaktorzone (6) des wenigstens einen Kreislaufreaktors (1) kontinuierlich eingeblasen wird, dass das CO₂ haltige Gas in der wenigstens einen inneren rohrförmigen Reaktorzone (6) von dem alkalischen Prozessstrom absorbiert wird und Abgas gemeinsam mit Restmengen des CO₂ am Kopf des wenigstens einen Kreislaufreaktors (1) abgezogen werden, dass das Verfahren bei Umgebungsdruck, insbesondere 1 atm geführt wird und dass an Lignin verarmte eingedickte Schwarzlauge gemeinsam mit darin enthaltenem ausgefällten Lignin gegebenenfalls nach einem Absitzen lassen, am Boden des wenigstens einen Kreislaufreaktors (1) abgezogen werden.

2. Verfahren nach Anspruch 1, **dadurch gekennzeichnet, dass** eine Verweilzeit von CO₂ in dem Kreislaufreaktor (1) durch eine Höhe der inneren rohrförmigen Reaktorzone (6) bestimmt wird.

3. Verfahren nach einem der Ansprüche 1 oder 2, **dadurch gekennzeichnet, dass** eine Geschwindigkeit der CO₂ Absorption in der eingedickten Schwarzlauge durch eine CO₂ Konzentration in dem CO₂ haltigen Gas gesteuert bzw. geregelt wird.

4. Verfahren nach einem der Ansprüche 1, 2 oder 3, **dadurch gekennzeichnet, dass** verdünntes CO₂, insbesondere Abgase aus CO₂ produzierenden Anlagen, wie z.B. einem Kalkofen in den Kreislaufreaktor (1) eingebracht werden.

5. Verfahren nach einem der Ansprüche 1 bis 4, **dadurch gekennzeichnet, dass** das Verfahren bei einer Temperatur zwischen 30 und 80 °C, insbesondere zwischen 65 und 75 °C durchgeführt wird.

6. Verfahren nach einem der Ansprüche 1 bis 5, **dadurch gekennzeichnet, dass** eine auszufällende Ligninqualität durch eine pH-Wert Regelung mit CO₂ als einem Ansäuerungsmittel auf Werte zwischen 13 und 8, insbesondere 11 bis 9 gesteuert bzw. geregelt wird.

7. Verfahren nach einem der Ansprüche 1 bis 6, **dadurch gekennzeichnet, dass** eine Mehrzahl von Kreislaufreaktoren (1) in einer Kaskade hintereinander angeordnet wird, dass die am Boden (2) des jeweiligen in der Kaskade stromaufwärts angeordneten Kreislaufreaktors (1) abgezogene an Lignin wenigstens teilweise verarmte eingedickte Schwarzlauge dem jeweiligen stromabwärts folgenden nächsten Kreislaufreaktor (1) aufgegeben wird und dass in den in der Kaskade von stromaufwärts nach stromabwärts aufeinanderfolgenden Kreislaufreaktoren (1) ein pH-Wertgefälle aufrecht erhalten wird.

8. Verfahren nach Anspruch 7, **dadurch gekennzeichnet, dass** das pH-Wertgefällte durch die CO₂ Konzentration in dem CO₂ haltigen Gas eingestellt wird, wobei dem am weitesten stromaufwärts angeordneten Kreislaufreaktor (1) die geringsten CO₂ Konzentration aufgegeben wird.

9. Verfahren nach einem der Ansprüche 1 bis 8, **dadurch gekennzeichnet, dass** das Absitzen lassen von ausgefälltem Lignin in einem gesonderten, insbesondere konusförmigen Absetzbehälter durchgeführt wird.

## Claims

1. A process for the continuous isolation of lignin from an alkaline process stream consisting of thickened black liquor, **characterized in that** the alkaline process stream is introduced continuously into a lower region of at least one circulation reactor (1) having two reactor zones in a concentric arrangement, **in that** a liquid level (10) of the alkaline process stream in the interior of the at least one circulation reactor (1) is chosen essentially at a level with an upper end (7) of at least one inner tubular reactor zone (6), **in that** a CO₂-containing gas is blown continuously from the bottom into the at least one inner tubular reactor zone (6) of the at least one circulation reactor (1), **in that** the CO₂-containing gas is absorbed by the alkaline process stream in the at least one inner circulation reactor zone (6) and offgas is drawn off together with residual amounts of the CO₂ at the top of the at least one circulation reactor (1), **in that** the process is run at ambient pressure, in particular 1 atm, and **in that** thickened black liquor with a reduced lignin content together with precipitated lignin present therein are drawn off, optionally after settling at the base of the at least one circulation reactor (1).

2. The process as claimed in claim 1, **characterized in that** a dwell time for CO₂ in the circulation reactor (1) is determined by a height of the inner tubular reactor zone (6).

3. The process as claimed in one of claims 1 or 2, **characterized in that** a rate of CO₂ absorption in the thickened black liquor is managed or controlled by means of a CO₂ concentration in the CO₂-containing gas.

4. The process as claimed in one of claims 1, 2 or 3, **characterized in that** diluteed CO₂, in particular offgas from CO₂-producing units such as a lime kiln, for example, is introduced into the circulation reactor (1).

5. The process as claimed in one of claims 1 to 4, **characterized in that** the process is carried out at a temperature between 30°C and 80°C, in particular between 65°C and 75°C.

6. The process as claimed in one of claims 1 to 5, **characterized in that** a quality of lignin to be precipitated is managed or controlled by a pH adjustment with CO₂ as an acidifying agent to values between 13 and 8, in particular 11 to 9.

7. The process as claimed in one of claims 1 to 6, **characterized in that** a plurality of circulation reactors (1) are arranged in succession in a cascade, **in that** the thickened black liquor which is drawn off at the base (2) of the circulation reactor (1) which is arranged respectively upstream and which has an at least partially reduced lignin content is passed to the respectively immediately downstream circulation reactor (1), and **in that** a pH drop is maintained in the successive circulation reactors (1) of the cascade from upstream to downstream.

8. The process as claimed in claim 7, **characterized in that** the pH drop is adjusted by the CO₂ concentration in the CO₂-containing gas, wherein the lowest CO₂ concentration is supplied to the circulation reactor which is the furthest upstream.

9. The process as claimed in one of claims 1 to 8, **characterized in that** settling of precipitated lignin is carried out in a separate, in particular conically-shaped settling tank.

## Revendications

1. Procédé pour isoler en continu de la lignine d'un flux de processus alcalin constitué de liqueur noire épaissie, **caractérisé en ce que** le flux de processus alcalin est introduit en continu dans une zone inférieure d'au moins un réacteur à circulation (1) présentant au moins deux zones de réacteur disposées concentriquement, qu'un niveau de liquide (10) du flux de processus alcalin à l'intérieur de l'au moins un réacteur à circulation (1) est choisi sensiblement à un niveau avec une extrémité supérieure (7) d'au moins une zone de réacteur tubulaire intérieure (6), qu'un gaz contenant du CO2 est injecté en continu par le bas dans l'au moins une zone de réacteur tubulaire intérieure (6) de l'au moins un réacteur à circulation (1), que le gaz contenant du CO2 dans l'au moins une zone de réacteur tubulaire intérieure (6) est absorbé par le flux de processus alcalin, et que des gaz d'échappement sont extraits conjointement avec des quantités résiduelles de CO2 au sommet de l'au moins un réacteur à circulation (1), que le procédé est mené à une pression ambiante, en particulier à 1 atm, et que de la liqueur noire épaissie appauvrie en lignine est extraite conjointement avec de la lignine précipitée qu'elle contient, le cas échéant après s'être déposée, au fond de l'au moins un réacteur à circulation (1).

2. Procédé selon la revendication 1, **caractérisé en ce qu'**un temps de séjour de CO2 dans le réacteur à circulation (1) est déterminé par une hauteur de la zone de réacteur tubulaire intérieure (6).

3. Procédé selon l'une des revendications 1 ou 2, **caractérisé en ce qu'**une vitesse d'absorption de CO2 dans la liqueur noire épaissie est commandée ou régulée par une concentration de CO2 dans le gaz contenant du CO2.

4. Procédé selon l'une des revendications 1, 2 ou 3, **caractérisé en ce que** du CO2 dilué, en particulier des gaz d'échappement issus d'installations de production de CO₂, comme un four à chaux, sont introduits dans le réacteur à circulation (1).

5. Procédé selon l'une des revendications 1 à 4, **caractérisé en ce que** le procédé est effectué à une température comprise entre 30 et 80 °C, en particulier entre 65 et 75 °C.

6. Procédé selon l'une des revendications 1 à 5, **caractérisé en ce qu'**une qualité de lignine à précipiter est commandée ou régulée par une régulation de la valeur de pH avec du CO2 en tant qu'agent acidifiant à des valeurs entre 13 et 8, en particulier de 11 à 9.

7. Procédé selon l'une des revendications 1 à 6, **caractérisé en ce qu'**une pluralité de réacteurs à circulation (1) sont disposés les uns après les autres en cascade, que la liqueur noire épaissie au moins en partie appauvrie en lignine extraite au fond (2) du réacteur à circulation (1) respectif disposé en amont dans la cascade est distribuée au prochain réacteur à circulation (1) respectif qui suit en aval et qu'un écart des valeurs de pH est maintenu dans les réacteurs à circulation (1) se suivant les uns les autres dans la cascade de l'amont vers l'aval.

8. Procédé selon la revendication 7, **caractérisé en ce que** l'écart des valeurs de pH est réglé par la concentration de CO2 dans le gaz contenant du CO₂, dans lequel la concentration de CO2 la plus faible est distribuée au réacteur à circulation (1) le plus éloigné en amont.

9. Procédé selon l'une des revendications 1 à 8, **caractérisé en ce que** le dépôt de lignine précipitée est effectué dans un récipient de dépôt séparé, en particulier conique.
